# EUROPEAN PATENT APPLICATION

(11) **EP 2 579 582 A1**
(43) Date of publication of application: **10.04.2013**
(21) Application number: 11184301.7
(22) Date of filing: 07.10.2011
(51) Int. Cl.: H04N 5/445, H04N 21/81, H04N 21/431, G06F 3/048

(54) **User interface apparatus, and associated method, for media playback device**

(71) Applicant: Research In Motion Limited, Waterloo, ON N2L 3W8 (CA)
(72) Inventor: Shirzadi, Farhoud, Waterloo, Ontario N2L 3W8 (CA)
(74) Representative: Hibbert, Juliet Jane Grace

(57) **Abstract**

A user interface apparatus, and an associated method, for a device having media playback functionality. A screen display generator generates a screen display for display at a display screen. The screen display includes a disc-shaped, or other elliptical-patterned, display icon at which album-track titles are listed. Input commands are entered at the display screen.

## Description

The present disclosure relates generally to a user interface for a device having media playback functionality. More particularly, the present disclosure relates to an apparatus and an associated method for displaying information associated with media in a particular format, such as in a specifically oriented pattern. In this manner, album-track titles, or other information associated with the media, can be displayed on a single screen to facilitate ease of user viewing of the information and to facilitate user interaction, e.g., to select individual tracks for playback.

### Background

Media player functionality enables an electronic device to play out media content in human perceptible form. Content can be provided to, stored and subsequently played back by the device as is known in the art. Depending on the media player configuration, audio, video, and/or multimedia content can be selected by a user and played back. Media playback functionality is sometimes also implemented at a standalone, or other, device. For example, an mp3 player is an example of a device having media playback functionality.

A device configured with media player functionality can have significant memory capacity, as large numbers of media files, sometimes in the many hundreds or more, may be stored locally. A device can be configured for storing a large number of audio files, or albums, each comprising a plurality of album tracks. Or, a plurality of tracks might be associated with a particular performer or associated with a common feature.

Typically, the media files are individually selectable for playback at the device. When a user of the device selects a particular media file, such as a specific album track for playback, the user typically identifies a track and once that track is identified, an appropriate instruction causes the device to playback the selected track. When a large number of media tracks are stored on the device, searching for a desired track can be cumbersome.

It is therefore advantageous to provide a system and methodology for improving media search and playback selection.

### Brief Description of the Drawings

Figure 1 illustrates a functional block diagram of a communication system having a device in which an implementation of the present disclosure is operable.

Figure 2 illustrates a process diagram representative of the process of operation of an implementation of the present disclosure.

Figure 3 illustrates an exemplary display generated pursuant to operation of an implementation of the present disclosure.

Figure 4 illustrates another exemplary display generated pursuant to operation of an implementation of the present disclosure.

Figure 5 illustrates another exemplary display generated pursuant to operation of an implementation of the present disclosure.

Figure 6 illustrates another exemplary display generated pursuant to operation of an implementation of the present disclosure.

Figure 7 illustrates another exemplary display generated pursuant to operation of an implementation of the present disclosure.

Figure 8 illustrates a method flow diagram representative of the method of operation of an implementation of the present disclosure.

### Detailed Description

In accordance with aspects of the present disclosure, there is provided a user interface for media playback on a device and methodology for implementing the same.

Through operation of an implementation of the present disclosure media information such as album-track titles of a media album, can be displayed in a circular, disc-patterned, or other elliptical-patterned display icon.

In accordance with one aspect of the present disclosure, the album-track titles or other information associated with the media, are displayed on a single screen, to thereby facilitate ease of user viewing of the information and to facilitate user interaction, e.g., to select individual tracks for playback.

In accordance with another aspect of the present disclosure, information related to selected media, such as that which is related to a media album, and the titles of album tracks of the selected media album, is overlaid upon or displayed together with the display icon.

In accordance with another aspect of the present disclosure, an indication is detected of user selection of a media album or other media. For instance, a user makes selection to view all available media, to view all media associated with a particular artist, to view media of a particular style-type, or to view media associated with another input categorization. Responsive to detection of the selection, album-track, or other, information is gathered and provided. The album-track, or other, information is gathered, for instance, by searching a device memory for the information. Or, the information is obtained by sending an inquiry to a remote location and receiving the information as part of, or pursuant to, a response to the request. The inquiry is sent, e.g., to a network 'cloud', embodied, e.g., by, an online music or media vendor or an online storage repository to access the information.

In accordance with another aspect of the present disclosure, the information is provided to a display generator, which generates a screen display that includes the provided information. When the information comprises the album-track titles of a selected media album or other selected media categorization, the display generator generates the album-track information associated with the selected media album or other selected media.

In another aspect of the present disclosure, the display generator causes generation of an elliptical-pattern display icon. The album-track titles or other information associated with the selected media are displayed on the elliptical patterned display icon. The elliptical patterned display icon is configured together with the album-titles or other information to be displayed on a display screen in a manner such that all of the album-track titles or other information is displayable on a single display screen.

In another aspect of the present disclosure, the elliptical-patterned display icon comprises a disc-shaped icon, analogous to a photographic record platter. The album-track titles or other information are caused to be displayed at or overlaid upon, the disc-shaped icon. The album-track titles or other information associated with each album track or other media portion is positioned to extend radially through the disc-shaped icon. The alphanumeric representations, positioned to extend radially, are separated by uniform, radial, separation distances. That is to say, the album-track titles or other information are positioned equidistantly from one another around the entirety of the disc-shaped platter. The disc-shaped platter, when displayed together with the media-portion-related information, is readily discernable by a viewer, and the information is furthermore readily ascertained. And, the location of the information at the disc-shaped icon is more readily remembered. For instance, a viewer is able to note the location of the album-track title by the location at, e.g., the top, bottom, left-side, right-side, upper right-side, upper left-side, lower right-side, lower left-side, etc. of the disc-shaped icon.

In another aspect of the present disclosure, the display generated by the display generator is displayed upon a display screen that may be viewed by a user and which permits the viewer to make selection of individual album-tracks for playback. If a displayed title indicates that the associated track is not available at the device, it provides for user selection to retrieve or purchase the missing track. In an implementation in which the display screen forms an interactive, touch screen display, the viewer of the icon together with the album-track titles or other information is able to make selection therefrom by touching a screen location in proximity to the selected title or other information. And, a desired playback sequence of album-tracks is analogously selectable by touching associated title or other information in the desired sequence.

In another aspect of the present disclosure, the additional functionality is caused to be displayed upon the display screen together with the elliptical-patterned display icon. The additional functionality includes, for instance, media-player control commands, such as play, fast forward, reverse, etc. Additional functionality, such as to provide for request for song lyrics, biographical information associated with an artist, an audio, and other information, is made by way of actuation of associated icons displayed together with the elliptical-patterned display icon on the display screen. Such a request for the additional information, if not available at the device is obtained from a remote location, e.g., an internet 'cloud' location.

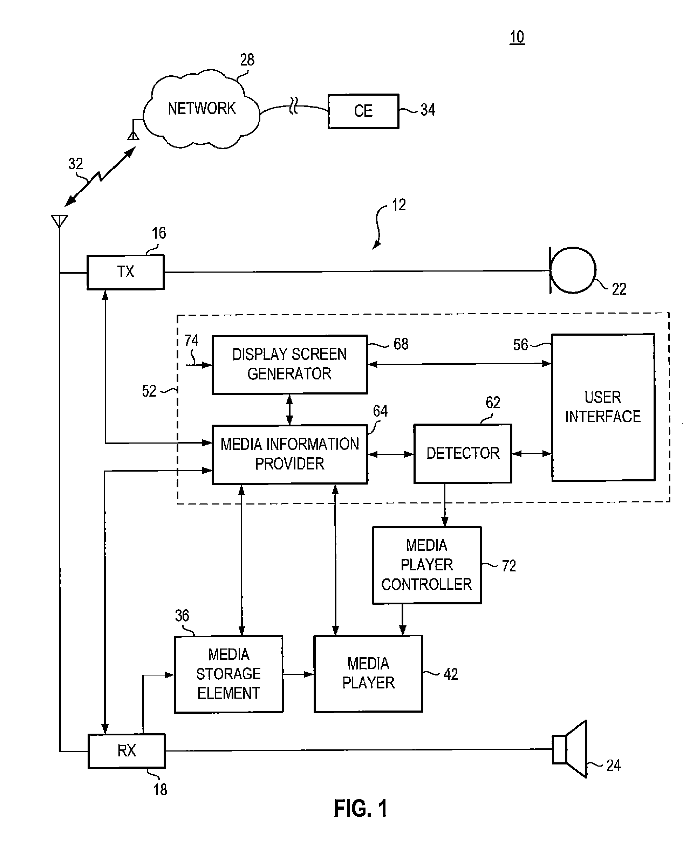

With reference to Figure 1, a communication system is shown generally at 10, and provides for communications with wireless devices, such as the wireless device 12. In the exemplary implementation, the communication system 10 comprises a cellular, WiFi, or other analogous communication system operable in general conformity with an appropriate operating standard specification. The communication system 10, more generally, is representative of any of various radio and wired communication system in which data is communicated with, to, or from a communication device, such as the wireless device 10. Additionally, while an implementation of the present disclosure shall be described with respect to implementation at a wireless device, such as the wireless device 12, in other implementations, an implementation of the present disclosure is embodied in other types of devices including, e.g., a stand-alone device, such as a stand-alone media player. Accordingly, while the following description shall describe exemplary operation of an implementation of the present disclosure, implemented at the wireless device 12, in other implementations, operation is analogous.

The wireless device 12 includes transceiver circuitry, here represented by a transmit part 16 and a receive part 18. The transmit part 16 is coupled to a transducer 22, here forming a microphone. And, the receive part 18 is coupled to a transducer 24, here forming a speaker. The transceiver circuitry transduces signals with a network part 28 of a network portion of the communication system. Signals are communicated between the network part 28 and the device 12 by way of channels 32, here defined upon a radio air interface extending between the network part and the wireless device. A communication endpoint (CE) 34 is placed in communication connectivity with the network portion 28 and is representative of any of various devices, such as a data server that sources data is communicated to the wireless device 12. The communication endpoint 34 is representative of an internet 'cloud' entity. Data sourced at the data server that is communicated to the wireless device comprises, for instance, media files, such as mp3 files that forms album tracks of a media album or information associated with the media files. The media files, sourced at the data server are communicated during operation of the communication system routed through the network 28 and upon communication channels 32 for delivery to the wireless device 12. The data server comprises, e.g., an online music store or an online storage entity. A connection is maintained between the network and the communication device to permit seamless streaming of media files to the device 12. Seamless streaming is provided, e.g., of media files that have not been purchased or stored at the device 12.

Data communicated to the wireless device is detected at the receive part 18. Media files, such as the mp3 files, are stored at a media storage element 36, available for playback by a media player 42 of the device 12. The media player 42 forms a device media player, and the device 12 forms a device having media playback functionality. Audio media or audio components of multimedia are played back by way of the speaker formed of the transducer 24.

As mentioned previously, the storage capacity at the device 12, here the storage capacity of media storage element 36, might be large, permitting storage of large number of album tracks or other media files. In conventional operation, selection of media, such as album tracks of a media album stored at, or provided to, the device 12 is sometimes cumbersome and unwieldy. Conventional media displays, such as Cover Flow™ does not permit the display of multiple album-track titles, such as the album-track titles of a media album. And, when media titles are listed in a sequential list, the sequential list might be lengthy, requiring scrolling by a viewer in order to locate a desired title.

The device includes an apparatus 52 of an implementation of the present disclosure that facilitates user selection of media for playback at the device 12. The apparatus 52 is functionally represented, implementable in any desired manner including, for instance, hardware elements, firmware elements, program code executable by processing circuitry and combinations thereof. Portions of the apparatus 52, in one implementation, are implemented as part of a controller or control device of the device 12.

Here, the apparatus includes a user interface 56 a detector 62, a media information provider 64, and a display screen generator 68. Media files, such as album tracks of a media album or other media portion of media are available for playback by the media player 42. The media stored at the media storage element 36 or obtained from a remote location, such as the communication endpoint 34 or elsewhere.

A user of the device 12 initiates operation, such as by command entered at an input element of the user interface 56. The command comprises, for instance, a command commences media playback operation and includes, for instance, identifcation of a selected media album or other media content for playback. Selection of other media-content categorization is similarly made. For example, identification is made of media content associated with a particular artist or a particular content-style. Or, most simply, the user selects 'all' for all song tracks that are available. The input command is detected by the detector 62. And, responsive to the detection of the input, the media information provider 64 accesses the media storage element 36 and obtains information associated with media content stored thereat. In the exemplary implementation in which the entered command includes indication of selected media, the contents of the media storage element are searched for information associated with media identified in the command. When the media identified in the command comprises a media album, the media information provider searches the storage element to locate album tracks that are part of the media album. Analogously, if the input command is associated with a particular artist or performer, the media information provider searches the media storage element to obtain information relating to content of the artist or performer. In one implementation, the media information provider causes generation of a request to a remote location, such as a remote storage or informational depository, represented by the communication endpoint 34. The request is generated and then caused to be transmitted by the transmit part 16. And, a response is detected by the receive part 18. In an exemplary scenario in which the user enters a command related to a selected media album, if not available, or only partially available at the local storage element 36, track-title information associated with all of the tracks of the selected media album is retrieved. Other selections entered by a user are analogously handled.

In the search, the media information provider obtains, for instance, track titles of the selected media album or track titles performed by the artist or performer.

The information obtained by the media information provider is provided to the display screen generator 68. The display screen generator operates to generate a screen display that, once generated, is displayed at a display screen of the user interface 56.

The generator 68 forms an elliptical-patterned display icon that, in the exemplary implementation comprises a disc-shaped icon of a configuration similar to the configuration of a phonographic platter disc, such as a so-called 45 rpm record. The information provided by the media information provider 64 is over laid on, or forms part of, the elliptical-patterned display icon. When album-track titles of a selected media album are provided to the display screen generator, the titles are displayed on the display icon in radially-extending directions, radially-extending from a focal, or center, point of the display icon. When, album-track titles are provided, the display screen generator positions the track titles equidistant from one another about the elliptically-patterned display icon. A viewer of the resultant icon and titles or other information displayed there together, is readily discernable by a viewer of a display screen that includes the icon and radially-extending titles or other information. Because of the positioning of the information, extending in the radial directions, a viewer is able readily to discern the information and also to associate the radial position of the information, such as in which quadrant or angular location at which the information is positioned, together with the information. Additionally, a viewer is able to see, on a single display displayed at the display screen of the user interface, the album-track titles or other information, associated with the selected media. If the number of album-track titles or other information is too large to conveniently fit at a single display icon, multiple display icons are utilized. And, a user views the information by accessing, e.g., flipping between, successive screen displays having the display icons and different portions of the titles or other information.

In the exemplary implementation, responsive to display at a display screen of the user interface, the user of the device, responsive to viewing the screen display, is able to select playback of an album track associated with a displayed album-track title or other information. And, in one implementation, a user is further able to select a playback sequence of multiple titles. That is to say, the user is capable of identifying a desired playback sequence of album tracks by entering the desired sequence. In one implementation, when titles or other information is displayed, identification is further made of whether the associated media is already available, e.g., at the local, memory storage element 36 or must be purchased. The displayed title, or other, information indicates the status differences, i.e., already available or not-yet-obtained, by using different font sizes or colors of the displayed information. Through interaction with the display, a user is able to select, and to control, playback of media files, change in the selection of media files, and to stream media files while in any display view. Audio settings and selection of display of other information is also selectable.

In the exemplary implementation, the user interface comprises a touch screen display. A user makes selection by touching the touch screen in proximity to the displayed title or other information.

Selection by the user is detected by the detector 62 and indications of the detector are provided to a media player controller 72 that causes the media player to operate in conformity with the detected input selections.

In a further implementation, the display generator generates a screen display that includes additional functionality. i.e., selectable audio settings and additional content-related information, such as album-track lyrics, biographical or historical information, live-performance or show information, or any other information of interest. Such additional information is provided to the display screen generator, herein indicated by way of the line 74. The information is obtained either from locally-stored information or by request to a remote location, such as the communication endpoint 34 or other 'cloud' entity.

In one implementation, the elliptical-patterned display icon and the album-track titles or other information displayed there together is rotatable, e.g., about a focal or center point to permit positioning of any selected album-track title or other information in a horizontal position, i.e., at a zero-degree radial orientation. In one implementation, a user enters a command to rotate the display icon through entry of a touch command upon a touch screen display indicative of the rotational direction until the display icon is rotated into a desired position. Additional commands to play, fast-forward, reverse, stop, etc. are analogously entered by a user by way of an input actuator, such as an appropriate touching input on a touch screen display.

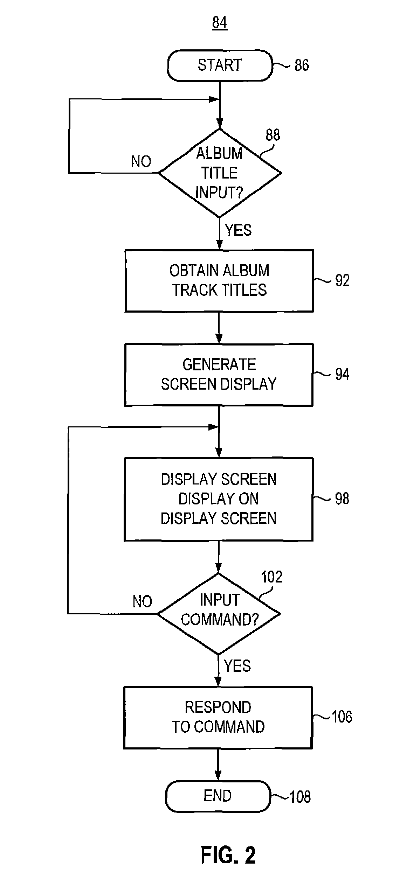

Figure 2 illustrates process 84 representative of exemplary operation of an implementation of the present disclosure. The process provides improved interface with a user of a device that contains media playback functionality and is here representative of operation in which selection is made by a user of a selected media album. The process is analogously applicable to other selections.

First, after entry, indicated by the start block 86, a determination is made at the decision block 88 as to whether a media album has been selected by a user. If not, the no branch is taken back to the block 88. If selection has been made and detected, the yes branch is taken to the block 92, and album-track titles associated with the selected media album are obtained.

Once obtained, and as indicated by the block 94, a screen display is generated,. The screen display includes an elliptical-patterned display icon at which the album-track titles are identified. Then, and as indicated by the block 98, the elliptical-patterned display icon forming part of the generated, screen display is displayed on a screen display.

The display is viewable by a user of the device, and the user is permitted to enter an input in response to the display, displayed on the display screen. The input comprises, e.g., a selection command selecting an album-track for playback or selection of a sequence of album tracks for playback.

A determination is made at the decision block 102 as to whether an input command has been entered. If not, the no branch is taken back to the block 98. If, conversely, entry of an input command has been detected, the yes branch is taken to the block 106, and actions are taken responsive to, and in conformity with the entered command. The process ends at the end block 108.

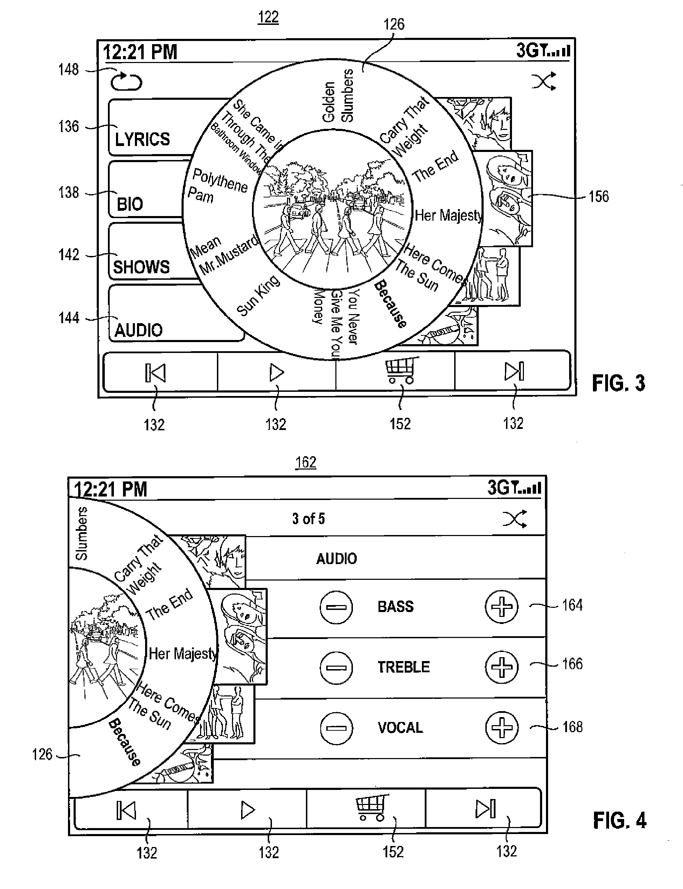

Figure 3 illustrates an exemplary screen display 122, exemplary of a display generated pursuant to operation of an implementation of the present disclosure. The screen display includes a disc-shaped display icon 126 and a plurality of radially-extending track-titles 128. The titles 128 are equal distantly positioned about the icon 126. The screen display further includes playback command icons 132, lyric, biography, shows, and audio links 136, 138, 142, and 144, respectively, replay icon 148, and shopping cart icon 152. The icons are merely exemplary. Other icons, representative of the same or other functions are alternately, or additionally, used. For instance, the shopping cart icon, in an alternate implementation is textually represented, alternately to identify the icon to permit, upon selection, downloading streaming playback, ticket-purchase, etc. activities. Visual themes 156 also form part of the screen display. In one implementation, the video themes, and other aspects of the display, are customizable.

Figure 4 illustrates a screen display 162, also representative of an exemplary screen display generated pursuant to operation of an implementation of the present disclosure. Here, again, the disc-shaped display icon 126 and track titles 128 are displayed along with command icons 132. Here, base, treble, and vocal up/down control icons 164, 166, and 168 are further illustrated. In alternate implementations, other control icons, such as a mid-range control icon and fractional octave equalizer band control icons. In exemplary operation, the display screen 162 is formed by a user selecting the audio icon 144 of the screen display 122 shown in Figure 3. In the exemplary implementation, the disc-shaped display icon 126 is moveable, such as by a touch-and-move motion carried out by a user. The positioning of the display icon 126 in Figures 3 and 4 illustrate positioning of the icon 126, first centered in the display 122 of Figure 3 and then at a left-hand side (as shown) of the display 162 of Figure 4. In the different positions of the display icon 126, different control icons are available for selection. In each position, however, the icons 132 and 152 are available for selection. And, a user is able to select from any of the displayed icons, e.g., to change the media track, stream the media, or purchase selected media, while in any of the display views.

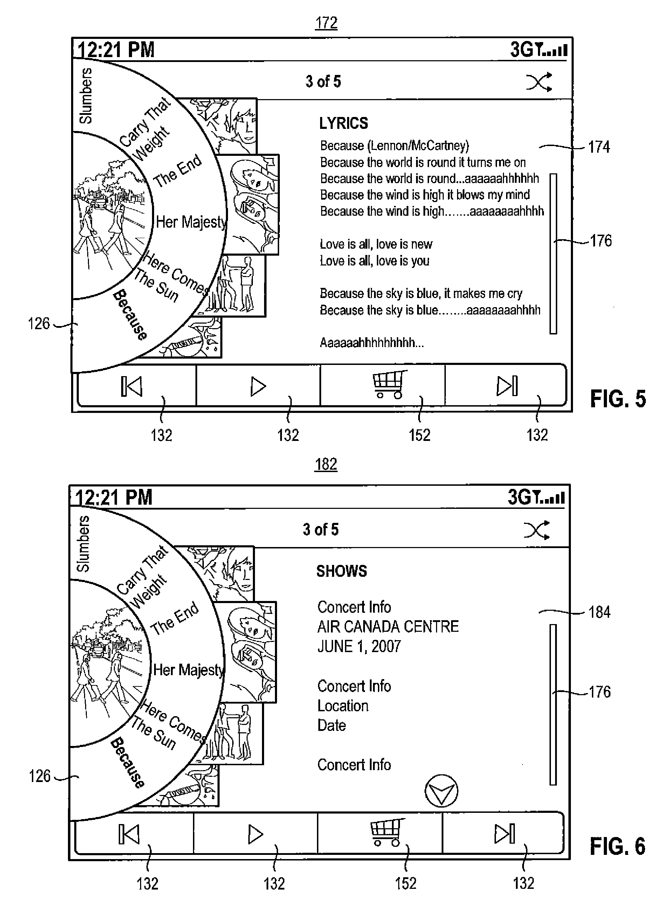

Figure 5 illustrates a screen display 172, also representative of an exemplary screen display generated pursuant to operation of an implementation of the present disclosure. The screen display is generated responsive to user selection of the lyric icon 136 of the screen display 122 shown in Figure 3. Here, the display includes lyrics 174 that are associated with a track-title 128. In the exemplary implementation, the lyrics are scrollable if of a length greater than the available screen area, such as by way of a touch-screen up or down command. A scroll bar 176 is shown in Figure 5 to provide for entry of the command.

Figure 6 illustrates a screen display 182, also representative of an exemplary screen display generated pursuant to operation of an implementation of the present disclosure. The display screen 182 is generated responsive to user selection of the shows icon 142 of the screen display 122 shown in Figure 3. The screen display includes one or more list entries 184 that identify upcoming shows to be performed by an artist or performer associated with the selected media or track title. In the exemplary implementation, the display information is also scrollable if the amount of information is greater than the available screen area, using, e.g., the scroll bar 176.

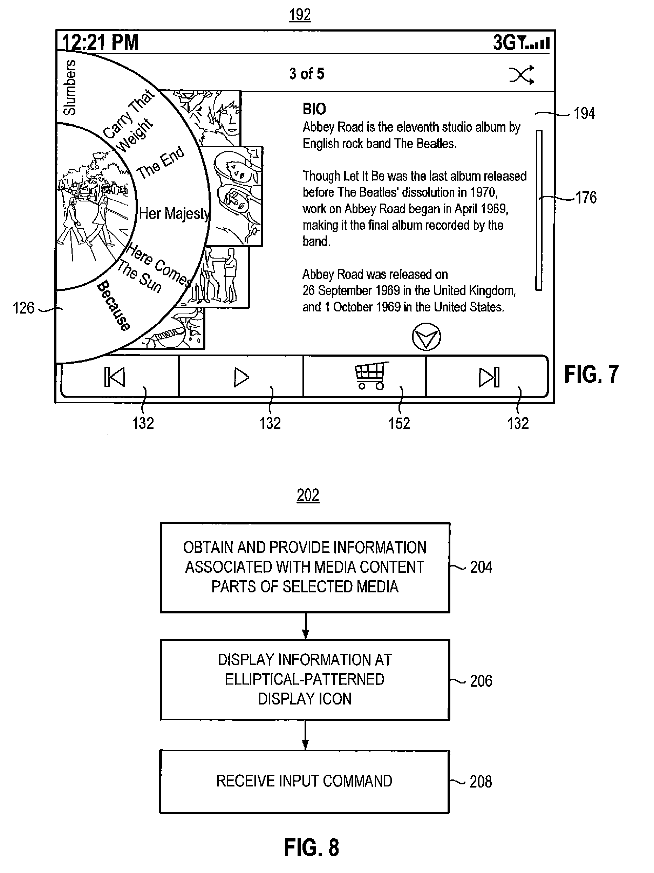

Figure 7 illustrates a screen display 192 that is also representative of an exemplary screen display generated pursuant to operation of an implementation of the present disclosure. The screen display 192 is formed responsive to user selection of the biography icon 138 of the screen display 122 shown in Figure 3. The screen display includes a biographical description 194 of an artist associated with the displayed media or media title. Again, scrolling, e.g., by way of the scroll bar 176, is provided if information greater than the available screen area is displayed.

Figure 8 illustrates a method 202 of the method of operation of an implementation of the present disclosure. The method facilitates use of a device having media playback functionality. First, and as indicated by the block 204, information associated with media content parts of selected media is obtained and provided. Then, and as indicated by the block 206, the provided information is displayed. The information is displayed at an elliptical-pattern display icon. Then, and as indicated by the block 208, an input command responsive to the display of the information is received.

In a further implementation, the display is integrated with a messaging application, such as an instant messaging service application. Participants in the messaging application are able to playback media files, drag-and-drop media files into the messaging application screen, and otherwise share the media.

Thereby, a manner is provided by which to facilitate user interaction with a device having media playback functionality.

Presently preferred implementations of the disclosure and many of improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. A user interface apparatus for a device having media playback functionality, comprising:
a media information provider configured to provide information associated with content parts of selected media; and
a display configured to display the information associated with each content part of the selected media at an elliptical patterned icon that displays the information associated with the content parts of the selected media.

2. The user interface apparatus of claim 1 further comprising a display generator configured to generate the elliptical patterned icon.

3. The user interface apparatus of claim 2 wherein said display generator is further configured to cause selected rotation of the elliptical patterned icon.

4. The user interface apparatus of claim 1 wherein said media information provider is configured to provide content-part titles of the selected media.

5. The user interface apparatus of claim 1 wherein the information associated with each of the content parts is displayed in a radially extending direction.

6. The user interface apparatus of claim 1 wherein said display comprises an interactive display configured to receive an input command responsive to display of the information at the elliptical patterned icon.

7. The user interface apparatus of claim 6 wherein the interactive display is configured to receive a content selection command.

8. The user interface apparatus of claim 6 wherein the interactive display is configured to receive a content ordering selection command.

9. The user interface apparatus of claim 6 wherein the interactive display is configured to receive a rotation command to rotate the elliptical patterned icon into rotated position.

10. The user interface apparatus of claim 1 wherein said display is further configured to display of content playback settings.

11. A method for facilitating use of a device having media playback functionality, said method comprising:
providing information associated with content parts of selected media; and
displaying the information provided during said providing associated with each content part of the selected media at an elliptical patterned icon that displays together the information associated with all of the content of the selected media.

12. The method of claim 11 wherein said providing the information further comprises obtaining the information.

13. The method of claim 11 wherein the selected media comprises an album and wherein the content titles comprise album track titles.

14. The method of claim 11 further comprising receiving an input command responsive to display of the information at the elliptical patterned icon.

15. The method of claim 11 wherein said displaying further comprises displaying content playback settings.
